# EUROPEAN PATENT SPECIFICATION

(11) **EP 3 156 378 B1**
(45) Date of publication and mention of the grant of the patent: **18.07.2018**
(21) Application number: 16190769.6
(22) Date of filing: 27.09.2016
(51) Int. Cl.: C03B 37/012, C03B 37/018, C03C 15/02

(54) **A METHOD FOR ETCHING A PRIMARY PREFORM**
VERFAHREN ZUM ÄTZEN EINER PRIMÄRVORFORM
PROCÉDÉ DE GRAVURE À L'ACIDE D'UNE PRÉFORME PRIMAIRE

(30) Priority: 16.10.2015 NL 1041529
(43) Date of publication of application: 19.04.2017
(73) Proprietor: Draka Comteq B.V., 1083 HJ Amsterdam (NL)
(72) Inventor: MILICEVIC, Igor, 1083 HJ Amsterdam (NL); VAN STRALEN, Mattheus Jacobus Nicolaas, 1083 HJ Amsterdam (NL); KRABSHUIS, Gertjan, 1083 HJ Amsterdam (NL); HARTSUIKER, Johannes Antoon, 1083 HJ Amsterdam (NL)
(74) Representative: Algemeen Octrooi- en Merkenbureau B.V.

(56) References cited:
- JP-A- S5 879 835
- US-A- 5 000 771
- US-B2- 7 722 777

## Description

The present invention relates in a first aspect to a method for etching a primary preform or core rod. The present invention moreover relates to a method of preparing a final preform and optical fibers therefrom.

The present invention relates to the field of optical fibers. More specifically, it relates to the field of manufacturing optical fibers by means of chemical vapor deposition (CVD) in which layers of (undoped or doped) silica are deposited on a substrate; examples thereof are modified chemical vapor deposition (MCVD), plasma-enhanced chemical vapor deposition (PECVD or PCVD), outside vapor deposition (OVD) and AVD (Axial Vapor Deposition also called VAD).

The use of an optical fiber for telecommunication purposes requires that the optical fiber is substantially free from defects (for example discrepancies in the percentage of dopants, undesirable cross-sectional ellipticity and the like), because, when considered over a large length of the optical fiber, such defects may cause a significant attenuation of the signal being transported. It is important, therefore, to realize a very uniform and reproducible process.

A process to manufacture optical fibers generally comprises the following steps. It should however be noted that other steps may be present or that one or more steps may be omitted. Step 1): preparation of primary preform; step 2) cleaning of primary preform; step 3) preparation of final preform; step 4) drawing of optical fibers. These steps are discussed in more detail below.

In the second step, which is the step to which the method according to the present invention relates, the outer surface of a primary preform or core rod is cleaned to remove surface impurities. The present invention is related to a method of cleaning the outer surface of said solid rod. Conventionally, there are two main methods for cleaning the outer surface of said primary preform. Firstly, it is known to use heat treatment, e.g. fire polishing to evaporate part of the outer surface. Secondly, chemical processing by using a etching technique, conventionally wet etching, e.g. with hydrofluoric acid, is used. Either of these processes (grinding and wet etching) may produce unwanted surface irregularities and both of these processes are time consuming.

US 5,000,771 discloses the removal of imperfections, such as bubbles and air lines from the preform surface by contacting the preform surface with a substantial portion of the electrically conducting plasma region (the plasma fireball) extending from a plasma torch.

US 7,722,777 discloses a method of cleaning core rods by use of an etching fluid, such as HF acid (wet etching).

JP S58 79835 discloses a glass tube in which an optical fiber preform is coaxially set and made to rotate while an etching gas containing a fluoride is fed into said glass tube, wherein the preform is heated.

A disadvantage of the prior art methods of cleaning the outside surface of the primary preform is that these methods could cause unwanted surface irregularities and are time consuming. Therefore, there is a need for an improved cleaning method which provides primary preforms having a reduced outside contamination content; which cleaned primary preforms are very suitable to be used in a subsequent process step.

It is an object of the present invention to provide a method for cleaning the outer surface of a primary preform to achieve reduced contamination on the outer surface thereof. It is another object of the present invention to provide a process that provides improved quality of primary preforms without the need of extensive modification to the apparatuses used.

One or more of these objects are achieved by the present invention by an outside etching process. In the present invention, an etching process is used to clean the inner surface.

### Summary of the invention

The present invention relates to a method for etching a primary preform, the method comprising the steps of:
* introducing the primary preform having an outer diameter OD_{PP} into the central cavity of a hollow etching tube having an outer diameter OD_{ET} and an inner diameter ID_{ET} such that in angular direction a part of the outer surface of the primary preform contacts a part of the inner surface of the etching tube, thereby forming an open region between a remaining part of the outer surface of the primary preform and a remaining part of the inner surface of the etching tube;
* mounting the etching tube with the primary preform inserted in its central longitudinal cavity on a lathe and introducing the etching tube into a central aperture of an applicator mounted on the lathe wherein the applicator and the etching tube are moved in axial direction with respect to each other;
* rotating the etching tube around its axis thereby causing a counter rotation of the primary preform within the etching tube; and
* coupling electromagnetic radiation into the applicator and creating within a part of the etching tube that is surrounded by the applicator a plasma that moves in translation back and forth over the length of the etching tube during one or more passes wherein during at least a part of at least one pass the outside of the primary preform is etched by supplying a fluorine-containing etching gas to the open region in order to obtain an etched primary preform.

In an embodiment, the difference between the outer diameter of the primary preform OD_{PP} and the inner diameter of the etching tube ID_{ET}, OD_{PP} - ID_{ET} is at least 4 millimeter, preferably at least 6 millimeter. In an embodiment, the process comprises at least 10 passes, preferably between 50 and 200 passes. In an embodiment, the fluorine-containing etching gas is supplied during at least part of at least one pass, preferably during the complete pass(es). In an embodiment, the fluorine-containing etching gas comprises or consists of a fluorine-containing gas selected from CCl₂F₂, CF₄, C₂F₆, C₄F₈, SF₆, NF₃, SO₂F₂, CHF₃, CClF₃, CCl₃F and one or more combinations thereof, and is preferably C₂F₆. In an embodiment, the fluorine-containing etching gas comprises a fluorine-containing gas mixed with one or more carrier gases, preferably argon and/or oxygen, preferably oxygen. In an embodiment, the applicator and the etching tube are moved in axial direction with respect to each other with a translation speed of movement of between 5 and 40 meter/second, more preferably between 10 and 30 meter/second, such as 20 meter/second. In an embodiment, the rotation of the etching tube is a continuous rotation or a stepwise rotation, preferably a stepwise rotation In an embodiment, the rotation speed of the etching tube is such that there are between 0.1 to 2 rotations per pass.. In an embodiment, the etching tube is a silica tube, preferably a quartz tube. In an embodiment, the power of the electromagnetic radiation is between 3 and 10 kWatt, preferably between 5 and 8 kWatt. In an embodiment, the etching tube has a length L_{ET} and the primary preform has a length L_{PP} and L_{PP} < L_{ET}. An etched primary preform obtained by or obtainable by the method according to invention is also disclosed. In another aspect, the present invention relates to a method of preparing a final preform from a primary preform according to the present invention to obtain an etched primary preform and increasing its diameter through the application of an external layer of silica.

In another aspect, the present invention relates to a method of manufacturing an optical fiber by preparing a final preform from the primary preform according to the present invention and subsequently drawing said final preform into an optical fiber.

In another aspect, An optical fiber obtained by or obtainable by the method of manufacturing an optical fiber according to the invention is also disclosed.

The present invention will be discussed in more detail below.

### Definitions as used in the present description

The following definitions are used in the present description and claims to define the stated subject matter. Other terms not cited below are meant to have the generally accepted meaning in the field.

"etching" as used in the present description means: to partly remove the outer surface of a glass object by a chemical process.

"plasma etching" as used in the present description means: an etching process using an etching gas and a plasma; the etching conditions for the etching gas are created or improved in a plasma.

"internally tangent circles" as used in the present description means: two circles, one with a smaller radius that is inside the other with a larger radius, which circles have a single point in common.

"counter rotating" as used in the present description means: rotating in opposite direction with respect to each other. Since the primary preform is present within the etching tube, when the etching tube is rotated clockwise, friction between the two effects a rotation of the primary tube in a counterclockwise manner and vise versa.

"primary preform" as used in the present description means: a solid rod or core rod that is obtained by a vapor deposition process. The term primary preform and core rod are used interchangeable.

"final preform" as used in the present description means: a solid rod obtained by externally providing a primary preform with extra (layers of) glass.

"etching tube" us used in the present description means: a hollow cylindrical tube having a cylindrical cavity. This tube is used to hold a primary preform to be etched. This tube can be reused and is not and will not form part of the final preform.

"glass" as used in the present description means: crystalline or vitreous (glassy) oxide material - e.g. silica (SiO₂) or quartz - deposited by means of a vapor deposition process; "silica" as used in the present description means: any substance in the form of SiOx, whether or not stoichiometric, and whether or not crystalline or amorphous, optionally doped.

"the applicator and the etching tube are moved in axial direction with respect to each other" as used in the present invention means: the applicator may move in axial direction over the etching tube and/or the etching tube may move in axial direction inside the central aperture of the applicator. In other words, the applicator and the etching tube move axially in view of each other. Preferably, the applicator moves over the etching tube.

"a plasma that moves in translation back and forth over the length of the etching tube" as used in the present description means: either by the movement of the applicator over the etching tube of by the movement of the etching tube inside of the central aperture of the applicator the plasma moves back and forth. Even if the applicator (and hence the plasma within in) are considered stationary and the etching tube moves axially, this is considered to be a plasma moving in translation back and forth according to the present invention. The plasma is formed in part of the open region between the outer surface of the primary preform and the inner surface of the etching tube; it is formed in that part of the open region that is surrounded by the applicator. In other words, the plasma is present inside of the etching tube in the part of the etching tube that is surrounded by the applicator and the plasma may extend to one (the pump side) or both sides of the applicator, hence a plasma may be present within the etching tube outside of the boundaries of the applicator.

"moved back and forth" as used in the present description means: a reciprocating movement or moving backwards and forwards in a straight line.

"pass" as used in the present description means: a part of the etching process defined by one forth and one back movement of the plasma along the length of the etching tube or vice versa. The plasma starts at one end of the available length of the etching tube, moves forth towards a reversal point near the other end of the available length of the etching tube and then moves back towards the one end to complete one pass. Available length of the etching tube is considered to be the length of the etching tube over which the applicator may move, excluding both ends of the etching tube that are mounted in the clamps of the lathe.

"etching gas" or "fluorine-containing etching gas" as used in the present description means: one or more gaseous fluorine-containing compounds or gases or a mixture of one or more gaseous fluorine-containing compound and optionally one or more carrier gases used during the etching process; an etching gas is a gas, which under the appropriate conditions (e.g., temperature and concentration) is capable of removing glass materials through chemical action. Hence the fluorine-containing etching gas may consist of one or more fluorine-containing gases or the fluorine-containing etching may comprise one or more fluorine-containing gases.

"fluorine-containing compound" or "fluorine-containing gas" as used in the present description means: a gaseous compound comprising at least one fluorine atom bound to a non-fluorine atom, e.g. a fluorinated hydrocarbon of fluorinated sulfur compound. In an embodiment, said fluorine-containing compound is a hydrogen-free fluorinated hydrocarbon, viz. a fluorine-containing compound in which no hydrogen atoms are present, e.g. wherein all hydrogen atoms have been replaced by fluorine atoms (fluorinated carbon compound or fluorocarbon compound).

"carrier gas" as used in the present description means: a gas that dilutes the concentration of the fluorine-containing gas in the fluorine-containing etching gas; preferably without reacting directly with the etching gas.

### Short description of the drawings

Figure 1 is a cross sectional view of a primary preform within an etching tube.
Figure 2 is a longitudinal sectional view of a configuration according to the present invention.

### Detailed description of the invention

The present invention relates to a plasma etching process to clean the outside surface of a primary preform.

In a first step of the preparation of an optical fiber a primary preform is produced. The processes to prepare such a primary preform are known to a person skilled in the art. For example, a hollow tube (also called substrate tube) may be subjected to an inside vapor deposition process to provide several layers of glass to form a so-called deposited tube, which may be subsequently contracted by heating ("collapsing") into a solid core rod, the primary preform. The substrate tube may also be removed prior to collapsing as discussed in WO2015002530. In another embodiment, a mandrel may be subjected to an outside vapor deposition process, after which the mandrel may be removed after which the deposited layers may be dried and consolidated.

PCVD, MCVD, OVD, or AVD processes may be used during the preparation of a primary preform. During PCVD generally, electromagnetic radiation is directed toward an applicator via a waveguide. The applicator, which surrounds a substrate tube, couples the radiation into the plasma. In an embodiment, the applicator and the substrate tube are surrounded by a furnace so as to maintain the substrate tube at a temperature of 900-1300 °C during the deposition process. The applicator (and hence the plasma it forms) is moved reciprocally in the substrate tube's longitudinal direction.

In a second step, which is the step to which the method according to the present invention relates, the outer surface of the primary preform or core rod is cleaned to remove surface impurities.

In a third step the cleaned primary preform thus obtained is converted into a so-called final preform by increasing its diameter through the application of an external layer of silica. The primary preform obtained after collapsing and cleaning may thus be externally provided with an additional amount of glass to increase the diameter thereof; for example by means of an external vapor deposition process or direct glass overcladding (so-called "overcladding") or by using one or more preformed glass tubes (so-called "sleeving"), thus obtaining a final preform.

In a fourth step, optical fibers are drawn from the primary or final preform. From the final preform thus produced, one end of which is heated, optical fibers are obtained by drawing on a drawing tower. The refractive index profile of the final preform corresponds to the refractive index profile of the optical fiber drawn from such a preform.

Unfortunately, due to the high temperatures used during the production of a primary preform and/or due to pollution coming from furnaces (e.g. copper from copper elements or iron, tungsten, nickel and/or chromium from the inoxidizable steel parts of the furnace) as well as from the environment (such as pollution present in the gases, such as hydrogen or methane), the outer glass surface of the primary preform is partly contaminated since the pollutants are entrapped in the glass upon cooling and solidifying. This contamination is mainly present on the outer surface or in the outermost glass layers of the primary preform. This contamination may lead to increased attenuation in the optical fiber drawn from this primary preform. The present inventors have observed that contaminations by metals, such as copper and iron, is especially detrimental and might lead to a large increase in attenuation of the 1310 nm and 1550 nm band.

Methods of chemical wet etching, for example using HF, are known, which wet etching is carried out on the outer surface of the primary preform before an external layer of additional glass is provided. Wet etching is undesirable since HF is a very dangerous acid and it leaves the surface of the primary preform full of small dents and irregularities.

The present inventors have found a method to remove said contamination by applying an etching procedure at the outside of the primary preform before an external layer of additional glass is provided.

The present invention relates, in a first aspect, to a method for etching a primary preform, the method comprising the steps of:
* introducing the primary preform having an outer diameter OD_{PP} into the central cavity of a hollow etching tube having an outer diameter OD_{ET} and an inner diameter ID_{ET} such that in angular direction a part of the outer surface of the primary preform contacts a part of the inner surface of the etching tube, thereby forming an open region between a remaining part of the outer surface of the primary preform and a remaining part of the inner surface of the etching tube;
* mounting the etching tube with the primary preform inserted in its central longitudinal cavity on a lathe and introducing the etching tube into a central aperture of an applicator mounted on the lathe wherein the applicator and the etching tube are moved in axial direction with respect to each other;
* rotating the etching tube around its axis thereby causing a counter rotation of the primary preform within the etching tube; and
* coupling electromagnetic radiation into the applicator and creating within a part of the etching tube that is surrounded by the applicator a plasma that moves in translation back and forth over the length of the etching tube during one or more passes wherein during at least a part of at least one pass the outside of the primary preform is etched by supplying a fluorine-containing etching gas to the open region in order to obtain an etched primary preform.

The solution that the present inventors have found to the problems cited above of the prior art is to provide an outside plasma etching process wherein the primary preform to be etched is present within an etching tube wherein said etching tube is mounted in a lathe and wherein a fluorine-containing etching gas is supplied to the open region between the primary preform and the inner surface of said etching tube.

### First phase

The first phase of the present method relates to introducing the primary preform into the central cavity of an etching tube. The primary preform is preferably laid inside of the cavity of the etching tube.

The open space that is present between the outer surface of the primary preform and the inner surface of the etching tube depends on the difference between the outer diameter of the primary preform (OD_{PP}) and the inner diameter of the etching tube (ID_{ET}). The open region has a non-annular shape in cross section. When a cross section view is prepared of the primary preform inside of the etching tube, the outer diameter of the primary preform (OD_{PP}) and the inner diameter of the etching tube (ID_{ET}) are both circles that with respect to each other are internally tangent circles. The open region has a semi-crescent shape, in the meaning that for a true crescent the circles are not internally tangent but at least partly overlapping.

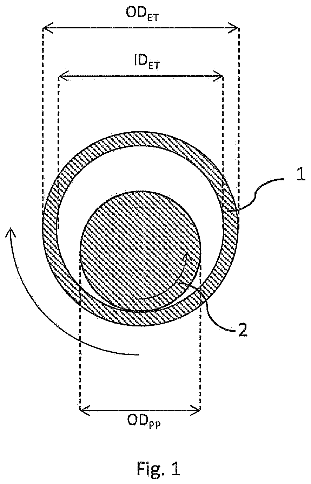

Figure 1 shows a cross sectional view of a primary preform 2 inside of an etching tube 1. It is clear from Figure 1 that the open region has a semi-crescent shape. The arrows indicate the direction of rotation when in operation.

In an embodiment, the difference between the outer diameter of the primary preform OD_{PP} and the inner diameter of the etching tube ID_{ET}, ODpp - ID_{ET} is at least 4 millimeter, preferably at least 6 millimeter in order to ensure sufficient gas flow between the outer diameter of the primary preform and the inner diameter of the etching tube.

In an embodiment, the difference between the outer diameter of the primary preform OD_{PP} and the inner diameter of the etching tube ID_{ET}, OD_{PP} - ID_{ET} is at most 15 millimeter, preferably at most 10 millimeter in order to ensure sufficient efficiency of etching. When the difference increases, etching will take place increasingly at the surface of the etching tube compared to the primary preform thereby decreasing the efficiency of the process.

In an embodiment of this aspect, the primary preform to be etched is introduced into the central cavity of said etching tube so that this primary preform is freely moved inside of said etching tube and is in contact with part of the inner surface of said etching tube. Said primary preform is hence present non-coaxially within the cavity of said etching tube.

In an embodiment, the etching tube has a length L_{ET} and the primary preform has a length L_{PP} and L_{PP} < L_{ET}. Preferably, the position of the reversal points (i.e. the points between which the plasma moves in translation back and forth) are set in such a manner that the full length of the primary preform is etched but preferably not more than the full length of the primary preform in case the length of the etching tube is significantly longer than the length of the primary preform. During the process the primary preform may have the tendency to move axially inside of the etching tube, e.g. towards the discharge side. This movement may be prevented by the presence of fixating means, e.g. a fixing glass bar, that is present on the inside of the etching tube adjacent in longitudinal direction to the primary preform to prevent movement.

### Second phase

The second phase of the present method relates to the mounting of the hollow etching tube with the primary preform inserted in its central longitudinal cavity. Said etching tube may be clamped in a lathe and should be mounted such that it extends through the central aperture of the applicator mounted on the lathe. This will ensure that a plasma may be formed inside of said etching tube. In an embodiment, the etching tube consists of one material. In an embodiment, the etching tube is a silica (SiO₂) tube, for example quartz. In an embodiment, the etching tube is a alumina (Al₂O₃) tube.

In an embodiment, the inner surface of the etching tube is inert to the etching gas, viz. made of a material inert to etching, such as alumina (at certain temperatures) or carbide. This will ensure that the inner surface of the etching tube is not etched. When the inner surface of the etching tube is etched, the wall thickness will decrease and so will its life span.

In an embodiment, the etching tube has a wall that comprises at least two layers, a outer layer of a first material and an inner layer of a second material. In an embodiment, the first material and the second material are the same. In an embodiment, the first material and the second material are different materials. In an embodiment, the first material is silica glass. In an embodiment, the second material is a material inert to etching, such as alumina or carbide.

### Third phase

The third phase of the present method relates to both rotating the etching tube and to the etching process. The rotation may be started prior to the etchings starts or may be started simultaneously with the etching or may be started somewhat later that the etching starts. Preferably, the rotation is continued until the end of the etching process.

The etching is performed by supplying a fluorine-containing etching gas into the etching tube and by coupling electromagnetic radiation into the applicator to create within a part of the etching tube that is surrounded by the applicator a plasma. The applicator and the plasma move in translation back and forth over the length of the etching tube during one or more passes.

The etching tube is rotated around its axis with a certain rotational speed. The rotating of the etching tube effects a counter rotating of the primary preform by friction of the inner surface of the etching tube and the outer surface of the primary preform. This friction does not significantly contributes to the removal of glass from the outside of the primary preform.

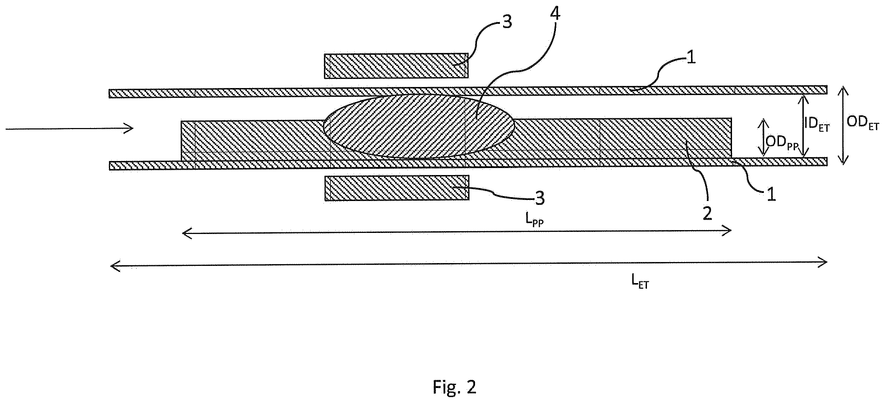

Figure 2 shows a side sectional view of an configuration according to the present invention. An applicator 3 is shown in which an etching tube 1 is introduced. The primary preform 2 is present inside of said etching tube 1. A plasma 4 is generated inside of the etching tube 2 in the region where the applicator 3 surrounds the etching tube 1. The outer diameter OD_{ET} of the etching tube 1, the inner diameter ID_{ET} of the etching tube 2, and the outer diameter ODpp of the primary preform 2 are shown as well as the length L_{PP} of the primary preform 2 and the length L_{ET} of the etching tube 1. The arrow shows the direction of the gas flow through the etching tube 1.

The etching tube is preferably rotated around it axis with a rotational speed of at least 0.2 revolutions per second, preferably at least 0.5 revolutions per second, such as between 1 and 4 revolutions per second, e.g. 2 revolutions per second. In other words, there are preferably between 12 and 120 revolutions per minutes, such as 30 per minute, or between 60 and 320 per minute. This will ensure a good balance between preventing inhomogeneity of the etching - in case of rotating too slow - on the one hand and prevention of slipping - in case of rotating too fast on the other hand.

The rotating of the etching tube may be continuous. In an embodiment, the rotation of the etching tube is a stepwise rotation. In an embodiment, the etching tube is rotating once every pass or twice every pass. In an embodiment, the etching tube is rotated by 45 to 180° each step, such as between 80 and 120° each step. In a specific embodiment, the etching tube is rotated at each reversal point (viz. two rotation steps per pass) with between 80 and 120°, preferably 100°, each step. The degree in which the rotational speed is transferred to the primary preform depends on several factors, such as the rotation speed of the etching tube and the amount of friction between these two, the rotational speed of the primary preform may be visually observed and in order to increase said speed, the rotational speed of the etching tube may be increased. The rotating of the primary preform ensures the best rotational homogeneity.

In an embodiment, the method comprising at least 10 passes, preferably between 50 and 200 passes. However, the number of passes is not limiting and depends on the amount of silica that is desired to be removed by etching and the amount that is removed by one pass; by this, the number of passes may be calculated.

In an embodiment, it is preferred to remove at least 0.1 mm, preferably at least 0.2 mm, more preferably at least 0.3 mm from the outside diameter of the primary preform. Based on the desired reduction in diameter, the outer diameter of the primary preform before etching, and the length of the primary preform it can be calculated what amount of silica should be removed. Then based on that calculation the settings for the process can be prepared, such as the pressure, the power of the plasma, the amount of etching-gas, the translation speed and the number of passes.

In an embodiment, the translation speed of movement is between 1 and 40 meter/minute, more preferably between 10 and 30 meter/minute, such as 20 meter/minute.

In an embodiment, the power of the electromagnetic radiation is between 3 and 10 kWatt, or between 4 and 9 kWatt, preferably between 5 and 8 kWatt, such as 6 kWatt. In an embodiment, the width of the plasma zone is between 100 and 250 mm, preferably 150 and 200 mm.

Normally, a plasma is generated only in a part of the etching tube (e.g., the part that is surrounded by the applicator) which part is called a plasma zone. Typically, the dimensions of the applicator are smaller than the respective dimensions of the furnace and the etching tube. Only at the position of the plasma are the fluorine-containing gases converted into reactive species that can effect the etching of the outer surface of the primary preform.

The applicator induces a plasma within part of the length of the etching tube; said plasma is typically located in the middle -axially- of the applicator. Such a plasma usually has a length of between 5 and 20 centimeter, preferably between 7 and 15 centimeter depending on the furnace used.

The method according to the present invention according to an embodiment comprises a furnace which surrounds both the applicator and etching tube. The applicator moves in translation back and forth over the etching tube within an area covered entirely by this furnace. The furnace heats at least the area of the etching tube in which the primary preform is placed. The temperature of the furnace that is preferred in this embodiment order to increase the effect of the etching process with the fluorine-containing gas is at least 1000 °C, preferably at least 1100 °C.

In an embodiment, there is no furnace present surrounding the applicator and the temperature is room temperature. In an embodiment, a furnace is present surrounding the applicator but the furnace is not active, viz. at room temperature. When the plasma is effected this might lead to an increase in the temperature of the etching tube and optionally the primary preform. The present inventors have observed that a temperature of around 500 °C may be reached by the etching tube by the plasma that is present.

In an embodiment, the process according to the present invention is carried out using cooling in order to (partially) counter the temperature increase effected by the plasma.

The process of etching will take place by disassociation of the fluorine-containing gas to fluorine ions. Without wishing to be bound by any theory, the inventors presume that these fluorine ions will react with the silica on the inner surface of the deposited tube to form SiF₄ and CO₂. In other words, SiO₂ is removed from the inner surface of the primary preform and any impurities that are present inside of that glass will be freed and will be carried out with the stream of gas and will hence be removed from the inner surface and outer glass layers of the primary preform.

The concentration of the fluorine-containing compound in the etching gas and the temperature at which the gas flows across the outer surface of the primary preform affects the rate of removal of the deposited oxide material and/or contaminated region by the etching gas. Preferably, the combination of the temperature and concentration of the fluorine-containing compound in the etching gas are sufficient to allow for a rapid etching rate (removal rate) of the deposited oxide material, which optimally results in decreasing the processing time.
In an embodiment, the fluorine-containing etching gas is supplied during at least part of at least one pass, preferably during the complete pass(es). In an embodiment, the fluorine-containing etching gas is supplied during at least part of at least one pass and the one or more carrier gases are supplied during the complete pass(es); this embodiment may be carried out by the presence of a valve in the line supplying the fluorine-containing gas. The fluorine-containing gas may be supplied by using an gas supply line comprising piping with a(n electric) valve containing an orifice. The valve may be controlled by a microcontroller. When a carrier gas is used it is preferred that there is a separate gas line and optionally valve for the carrier gas and the fluorine containing gas. A mass flow controller (MFC) may be used to regulate the flow of gas(es).

When it is observed that there is a non-uniform distribution of impurities over the length of the primary preform; e.g. when there are more impurities near one or both ends; it is possible to preferentially etch when the applicator is on or near these ends. For example, one or more passes with etching (and thus supply of etching gas or fluorine-containing gas) during the complete pass(es) and one or more passes with only partial etching.

In an embodiment, the fluorine-containing gas is selected from CCl₂F₂, CF₄, C₂F₆, C₄F₈, SF₆, NF₃, SO₂F₂, CHF₃, CClF₃, CCl₃F and one or more combinations thereof, and is preferably C₂F₆.

In an embodiment, the fluorine-containing etching gas comprises a fluorine-containing compound/gas and a carrier gas. In an embodiment, the fluorine-containing etching gas comprises two or more fluorine-containing compounds and a carrier gas. In an embodiment, the fluorine-containing etching gas comprises a fluorine-containing compound/gas and two or more carrier gases. In an embodiment, the fluorine-containing etching gas comprises two or more fluorine-containing compounds/gases and two or more carrier gases.

In an embodiment, the carrier gas is selected from the group consisting of oxygen (O₂), nitrogen (N₂), and argon (Ar). In an embodiment, the carrier gas is oxygen (O₂). In an embodiment, the fluorine-containing etching gas comprises C₂F₆ as the fluorine-containing compound and O₂ as the carrier gas.

When a fluorocarbon compound (fluorinated carbon compound) is used in an etching gas, it is possible that deposition of elemental carbon takes place. Without wishing to be bound by a theory the inventors propose that the fluorine atoms of the etching gas take care of the etching process and the carbon atoms of the etching gas are deposited on the inside surface of the substrate tube. In some cases a black film is found to be formed. The use of oxygen (O₂) as carrier gas is preferred when a fluorocarbon compound is used. The oxygen was found by the present inventors to react with the carbon part of the etching gas to prevents carbon (C) deposition.

The fluorine-containing gas may be present in the open region or space between the inner surface of the etching tube and the inner surface of the primary preform over the length of the plasma. Any fluorine-containing gas that is not activated to provide an etching effect will be removed from the furnace together with any gasses formed during the etching process (such as CO₂ and SiF₄), e.g. by a decreased pressure duct or a vacuum pump connected to the etching tube. This will ensure safe removal of any hazardous gases. A gas scrubber may be present at the pump side.

The fluorine-containing gas is preferably supplied in an amount of at least 100 sccm (standard cubic centimeter per minute) under standard conditions (20 °C; 1 atmosphere), more preferably at least 150 sccm, such as 200 sccm or more 1.

The total gas flow (either pure fluorine-containing gas(es) or a mixture of fluorine-containing gas(es) and a carrier gas) is at least 1 slm (standard liter per minute), preferably at least 2 slm, such as at least 3 slm, preferably between 3 and 5 slm, for example 4 slm.
The present invention preferably uses a so-called low pressure plasma, being between 1 mbar and 100 mbar, e.g. below 50 mbar, preferably between 5 mbar and 20 mbar, such as 10 mbar. Preferably, said reduced pressure is maintained by a vacuum pump.
In an embodiment, the etching process provides a primary preform having a reduced diameter in view of a primary preform that has not been etched. In other words, the etching removes glass (silica) and impurities from the outer surface of the primary preform and decreases the outer diameter thereof.
The amount of material that is removed by etching depends on several factors, such as the source of the electromagnetic radiation, the amount of gases used, the pressure inside of the etching tube (decreased pressure means an increased plasma length means increased etching).
The present invention is suitable for primary preforms prepared to make multimode optical fibers or to make single mode optical fibers. An etched primary preform obtained by or obtainable by the present method. The present invention also relates to multimode optical fibers or single mode optical fibers obtained therefrom are also disclosed. The present invention does not required significant changes to the instrumental setup or apparatus that are already in use. Therefore, the solution to the problem presented in the present invention are easy and cost-effective to implement.
The present invention will now be explained on the basis of the examples, in which connection it should be noted, however, that the present invention is by no means limited to such special examples.

### Examples

In order to prove the concept of the present invention a core rod was subjected to etching with an etching gas at increased temperature and at room temperature.

### Example 1

A silica etching tube having an outer diameter of 46 millimeter and an inner diameter of 41 millimeter was introduced into a lathe. A multimode primary preform having an outer diameter of 33 millimeter was introduced into said etching tube. Etching was carried out with a furnace at a temperature of 1100 °C. The applicator was moved within the furnace over the primary preform with a translation speed of 20 meters per minute. The power of the electromagnetic radiation was 6 kWatt. The etching tube was rotated twice per pass with 100 ° per rotation step. The etching was carried out with as etching gas a mixture of Freon gas (C₂F₆) 200 sccm and oxygen 3 slm. The remaining gases where removed by means of a line having a reduced pressure of approx. 10 mbar. After 30 minutes the process was stopped and the primary preform was removed. The primary preform was reweight and was 60 grams lighter. Also the etching tube was weighed and as expected also showed etching, viz. 200 gram.

### Example 2

A silica etching tube having an outer diameter of 46 millimeter and an inner diameter of 41 millimeter was introduced into a lathe. A multimode primary preform having an outer diameter of 33 millimeter was introduced into said etching tube. Etching was carried out without an active furnace, viz. the furnace that is present was not switched on, viz. at room temperature (21 °C). The applicator was moved within the furnace over the primary preform with a translation speed of 2 meters per minute. The power of the electromagnetic radiation was 6 kWatt. The etching tube was rotated continuously with a frequency of 0.5 rotations per second (30 rotations per minute). The etching was carried out with as etching gas a mixture of Freon gas (C₂F₆) 1000 sccm and oxygen 1 slm. The remaining gases where removed by means of a line having a reduced pressure of approx. 90 mbar. After 30 minutes the process was stopped and the primary preform was removed. The primary preform was reweight and was 18 grams lighter. Also the etching tube was weighed and as expected also showed etching, viz. 22 gram.

From the Examples above it is clear that etching can be carried out with and without the use of external heating (furnace). It moreover shows that etching can be carried out with different translation speeds and different pressures. Moreover, it shows that the amount of material removed may be tuned by tuning the conditions (e.g. temperature, translation speed and pressure). Moreover, it shows that the amount of material removed from the primary preform compared to the etching tube may be tuned by tuning the conditions (e.g. temperature, translation speed and pressure).

Therefore, one or more aims of the present invention mentioned above have been reached. More embodiments of the present invention are cited in the appended claims.

## Claims

1. A method for etching a primary preform (2), the method comprising the steps of:
* introducing the primary preform (2) having an outer diameter OD_{PP} into the central cavity of a hollow etching tube (1) having an outer diameter OD_{ET} and an inner diameter ID_{ET} such that in angular direction a part of the outer surface of the primary preform (2) contacts a part of the inner surface of the etching tube (1), thereby forming an open region between a remaining part of the outer surface of the primary preform (2) and a remaining part of the inner surface of the etching tube (1);
* mounting the etching tube with the primary preform (2) inserted in its central longitudinal cavity on a lathe and introducing the etching tube (1) into a central aperture of an applicator (3) mounted on the lathe wherein the applicator (3) and the etching tube (1) are moved in axial direction with respect to each other;
* rotating the etching tube (1) around its axis thereby causing a counter rotation of the primary preform (2) within the etching tube (1); and
* coupling electromagnetic radiation into the applicator (3) and creating within a part of the etching tube (1) that is surrounded by the applicator (3) a plasma (4) that moves in translation back and forth over the length of the etching tube (1) during one or more passes wherein during at least a part of at least one pass the outside of the primary preform (2) is etched by supplying a fluorine-containing etching gas to the open region in order to obtain an etched primary preform.

2. The method according to claim 1, wherein the difference between the outer diameter of the primary preform OD_{PP} and the inner diameter of the etching tube ID_{ET}, OD_{PP} - ID_{ET} is at least 4 millimeter, preferably at least 6 millimeter.

3. The method according to any one of the preceding claims, comprising at least 10 passes, preferably between 50 and 200 passes.

4. The method according to any one of the preceding claims, wherein the fluorine-containing etching gas is supplied during at least part of at least one pass, preferably during the complete pass(es).

5. The method according to any one of the preceding claims, wherein the fluorine-containing etching gas comprises or consists of a fluorine-containing gas that is selected from CCl₂F₂, CF₄, C₂F₆, C₄F₈, SF₆, NF₃, SO₂F₂, CHF₃, CClF₃, CCl₃F and one or more combinations thereof, and is preferably C₂F₆.

6. The method according to any one of the preceding claims, wherein the fluorine-comprising etching gas comprises a fluorine-containing gas mixed with one or more carrier gases, wherein said one or more carrier gases are preferably argon and/or oxygen, preferably oxygen.

7. The method according to any one of the preceding claims, wherein the applicator (3) and the etching tube (1) are moved in axial direction with respect to each other with a translation speed of movement of between 1 and 40 meter/second, more preferably between 10 and 30 meter/second, such as 20 meter/second.

8. The method according to any one of the preceding claims, wherein the rotation of the etching tube (1) is a continuous rotation or a stepwise rotation, preferably a stepwise rotation.

9. The method according to any one of the preceding claims, wherein the rotation speed of the etching tube (1) is such that there are between 0.1 to 2 rotations per pass.

10. The method according to any one of the preceding claims, wherein the power of the electromagnetic radiation is between 3 and 10 kWatt, preferably between 5 and 8 kWatt.

11. The method according to any one of the preceding claims, wherein the etching tube (1) has a length L_{ET} and the primary preform (2) has a length L_{PP} and L_{PP} < L_{ET}.

12. The method according to any one of the preceding claims, wherein the etching tube (1) is a silica tube, preferably a quartz tube.

13. A method of preparing a final preform from a primary preform (2) comprising etching a primary preform (2) according to any one of the preceding claims to obtain an etched primary preform and increasing its diameter through the application of an external layer of silica.

14. A method of manufacturing an optical fiber from a final preform comprising etching a primary preform (2) according to any one of claims 1-12 to obtain an etched primary preform and increasing its diameter through the application of an external layer of silica and subsequently drawing said final preform into an optical fiber.

## Patentansprüche

1. Verfahren zum Ätzen einer primären Vorform (2), wobei das Verfahren die folgenden Schritte umfasst:
- Einführen der primären Vorform (2), die einen Außendurchmesser OD_{PP} hat, in den zentralen Hohlraum einer hohlen Ätzröhre (1), die einen Außendurchmesser OD_{ET} und einen Innendurchmesser ID_{ET} hat, sodass in Winkelrichtung ein Teil der äußeren Fläche der primären Vorform (2) einen Teil der inneren Fläche der Ätzröhre (1) berührt und dadurch einen offenen Bereich zwischen einem verbleibendem Teil der äußeren Fläche der primären Vorform (2) und einem verbleibendem Teil der inneren Fläche der Ätzröhre (1) bildet;
- Montieren der Ätzröhre mit der in ihren zentralen longitudinalen Hohlraum eingeführten primären Vorform (2) auf einer Drehmaschine und Einführen der Ätzröhre (1) in eine zentrale Öffnung eines auf der Drehmaschine montierten Applikators (3), wobei der Applikator (3) und die Ätzröhre (1) in axialer Richtung in Bezug zueinander bewegt werden;
- Rotieren der Ätzröhre (1) um ihre Achse wodurch eine Gegenrotation der primären Vorform (2) innerhalb der Ätzröhre (1) verursacht wird; und
- Einkoppeln elektromagnetischer Strahlung in den Applikator (3) und Erzeugen eines Plasmas (4) innerhalb eines Teils der Ätzröhre (1), welche vom Applikator (3) umgeben ist, das sich translatorisch über die Länge der Ätzröhre (1) während einem oder mehreren Durchgängen vor und zurück bewegt, wobei während wenigstens einem Teil von wenigstens einem Durchgang die Außenseite der primären Vorform (2) durch das Zuführen eines flourhaltigen Ätzgases zum offenen Bereich geätzt wird, um eine geätzte primäre Vorform zu erhalten.

2. Verfahren nach Anspruch 1, wobei der Unterschied zwischen dem Außendurchmesser der primären Vorform OD_{PP} und dem Innendurchmesser der Ätzröhre ID_{ET}, OD_{PP} - ID_{ET} wenigstens 4 Millimeter, vorzugsweise wenigstens 6 Millimeter beträgt.

3. Verfahren nach einem der vorangegangenen Ansprüche, umfassend wenigstens 10 Durchgänge, vorzugsweise zwischen 50 und 200 Durchgängen.

4. Verfahren nach einem der vorangegangenen Ansprüche, wobei das flourhaltige Ätzgas während wenigstens eines Teils wenigstens eines Durchgangs zugeführt wird, vorzugsweise während des/der kompletten Durchgangs/Durchgänge.

5. Verfahren nach einem der vorangegangenen Ansprüche, wobei das flourhaltige Ätzgas ein flourhaltiges Gas umfasst oder daraus besteht, welches aus CCl₂F₂, CF₄, C₂F₆, C₄F₈, SF₆, NF₃, SO₂F₂, CHF₃, CClF₃, CCl₃F und einer oder mehrerer Kombinationen davon ausgewählt ist, und vorzugsweise C₂F₆ ist.

6. Verfahren nach einem der vorangegangenen Ansprüche, wobei das flourhaltige Ätzgas ein flourhaltiges Gas gemischt mit einem oder mehreren Trägergasen umfasst, wobei eines oder mehrere Trägergase vorzugsweise Argon und/oder Sauerstoff sind, vorzugsweise Sauerstoff.

7. Verfahren nach einem der vorangegangenen Ansprüche, wobei der Applikator (3) und die Ätzröhre (1) in axialer Richtung in Bezug zueinander bewegt werden mit einer translatorischen Bewegungsgeschwindigkeit zwischen 1 und 40 m/s, vorzugsweise zwischen 10 und 30 m/s, wie zum Beispiel 20 m/s.

8. Verfahren nach einem der vorangegangenen Ansprüche, wobei die Rotation der Ätzröhre (1) eine kontinuierliche Rotation oder eine schrittweise Rotation ist, vorzugsweise eine schrittweise Rotation.

9. Verfahren nach einem der vorangegangenen Ansprüche, wobei die Rotationsgeschwindigkeit der Ätzröhre (1) derart ist, dass sie zwischen 0,1 bis 2 Rotationen pro Durchgang beträgt.

10. Verfahren nach einem der vorangegangenen Ansprüche, wobei die Leistung der elektromagnetischen Strahlung zwischen 3 und 10 kW beträgt, vorzugsweise zwischen 5 und 8 kW.

11. Verfahren nach einem der vorangegangenen Ansprüche, wobei die Ätzröhre (1) eine Länge L_{ET} hat und die primäre Vorform (2) eine Länge L_{PP} hat und L_{PP} < L_{ET}.

12. Verfahren nach einem der vorangegangenen Ansprüche, wobei die Ätzröhre (1) eine Siliziumdioxidröhre ist, vorzugsweise eine Quarzröhre.

13. Verfahren zur Herstellung einer finalen Vorform aus einer primären Vorform (2) umfassend das Ätzen einer primären Vorform (2) nach einem der vorangegangenen Ansprüche zum Erhalten einer geätzten primären Vorform und zum Vergrößern ihres Durchmessers durch das Aufbringen einer äußeren Schicht von Siliziumdioxid.

14. Verfahren zur Herstellung einer optischen Faser aus einer finalen Vorform umfassend das Ätzen einer primären Vorform (2) nach einem der Ansprüche 1-12 zum Erhalten einer geätzten primären Vorform und zum Vergrößern ihres Durchmessers durch das Aufbringen einer äußeren Schicht von Siliziumdioxid und das anschließende Ziehen der finalen Vorform zu einer optischen Faser.

## Revendications

1. Procédé de gravure d'une préforme primaire (2), le procédé comprenant les étapes consistant :
* à introduire la préforme primaire (2) ayant un diamètre extérieur ODₚₚ dans la cavité centrale d'un tube de gravure creux (1) ayant un diamètre extérieur OD_{ET} et un diamètre intérieur ID_{ET} de sorte que dans une direction angulaire une partie de la surface extérieure de la préforme primaire (2) entre en contact avec une partie de la surface intérieure du tube de gravure (1), formant ainsi une région ouverte entre une partie restante de la surface extérieure de la préforme primaire (2) et une partie restante de la surface intérieure du tube de gravure (1) ;
* à monter le tube de gravure avec la préforme primaire (2) insérée dans sa cavité longitudinale centrale sur un tour et introduire le tube de gravure (1) dans une ouverture centrale d'un applicateur (3) monté sur le tour, où l'applicateur (3) et le tube de gravure (1) sont déplacés dans une direction axiale l'un par rapport à l'autre ;
* à faire tourner le tube de gravure (1) autour de son axe, provoquant ainsi une contre-rotation de la préforme primaire (2) dans le tube de gravure (1) ; et
* à coupler un rayonnement électromagnétique dans l'applicateur (3) et créer dans une partie du tube de gravure (1) qui est entourée par l'applicateur (3) un plasma (4) qui se déplace en translation d'avant en arrière sur la longueur du tube de gravure (1) pendant une ou plusieurs passe(s), où pendant au moins une partie d'au moins une passe, l'extérieur de la préforme primaire (2) est gravé en fournissant un gaz de gravure contenant du fluor à la région ouverte afin d'obtenir une préforme primaire gravée.

2. Procédé selon la revendication 1, dans lequel la différence entre le diamètre extérieur de la préforme primaire ODₚₚ et le diamètre intérieur du tube de gravure ID_{ET}, ODₚₚ - ID_{ET} est d'au moins 4 millimètres, de préférence d'au moins 6 millimètres.

3. Procédé selon l'une quelconque des revendications précédentes, comprenant au moins 10 passes, de préférence entre 50 et 200 passes.

4. Procédé selon l'une quelconque des revendications précédentes, dans lequel le gaz de gravure contenant du fluor est fourni pendant au moins une partie d'au moins une passe, de préférence pendant le(s) passe(s) complète(s).

5. Procédé selon l'une quelconque des revendications précédentes, dans lequel le gaz de gravure contenant du fluor comprend ou est constitué d'un gaz contenant du fluor qui est choisi parmi CCl₂F₂, CF₄, C₂F₆, C₄F₈, SF₆, NF₃, SO₂F₂, CHF₃, CClF₃, CCl₃F et une ou plusieurs combinaison(s) de ceux-ci, et est de préférence C₂F₆.

6. Procédé selon l'une quelconque des revendications précédentes, dans lequel le gaz de gravure comprenant du fluor comprend un gaz contenant du fluor mélangé avec un ou plusieurs gaz porteur(s), où ledit/lesdits un ou plusieurs gaz porteur(s) est/sont de préférence l'argon et/ou l'oxygène, de préférence l'oxygène.

7. Procédé selon l'une quelconque des revendications précédentes, dans lequel l'applicateur (3) et le tube de gravure (1) sont déplacés dans la direction axiale l'un par rapport à l'autre avec une vitesse de déplacement en translation comprise entre 1 et 40 mètre(s)/seconde, plus préférablement entre 10 et 30 mètres/seconde, telle que 20 mètres/seconde.

8. Procédé selon l'une quelconque des revendications précédentes, dans lequel la rotation du tube de gravure (1) est une rotation continue ou une rotation pas-à-pas, de préférence une rotation pas-à-pas.

9. Procédé selon l'une quelconque des revendications précédentes, dans lequel la vitesse de rotation du tube de gravure (1) est telle qu'il existe entre 0,1 et 2 rotation(s) par passe.

10. Procédé selon l'une quelconque des revendications précédentes, dans lequel la puissance du rayonnement électromagnétique est comprise entre 3 et 10 kWatt, de préférence entre 5 et 8 kWatt.

11. Procédé selon l'une quelconque des revendications précédentes, dans lequel le tube de gravure (1) a une longueur L_{ET} et la préforme primaire (2) a une longueur Lₚₚ et Lₚₚ < L_{ET}.

12. Procédé selon l'une quelconque des revendications précédentes, dans lequel le tube de gravure (1) est un tube de silice, de préférence un tube de quartz.

13. Procédé de préparation d'une préforme finale à partir d'une préforme primaire (2) comprenant la gravure d'une préforme primaire (2) selon l'une quelconque des revendications précédentes pour obtenir une préforme primaire gravée et l'augmentation de son diamètre par l'application d'une couche externe de silice.

14. Procédé de fabrication d'une fibre optique à partir d'une préforme finale comprenant la gravure d'une préforme primaire (2) selon l'une quelconque des revendications 1 à 12 pour obtenir une préforme primaire gravée et l'augmentation de son diamètre par l'application d'une couche externe de silice et ensuite l'étirage de ladite préforme finale en une fibre optique.
